Europäisches Patentamt

European Patent Office

Office européen des brevets

(19)

(11) Publication number: **0 182 423 B1**

## (12) EUROPEAN PATENT SPECIFICATION

(45) Date of publication of patent specification: **26.08.92**

(51) Int. Cl.5: **H04N 1/40**, G01T 1/29, G03B 41/00

(21) Application number: **85201811.8**

(22) Date of filing: **08.11.85**

(54) **Radiation image processing apparatus and method.**

(30) Priority: **14.11.84 JP 240361/84**
         **14.11.84 JP 240362/84**

(43) Date of publication of application:
    **28.05.86 Bulletin  86/22**

(45) Publication of the grant of the patent:
    **26.08.92 Bulletin  92/35**

(84) Designated Contracting States:
    **DE FR GB**

(56) References cited:
    **EP-A- 0 031 952**
    **EP-A- 0 032 237**

(73) Proprietor: **FUJI PHOTO FILM CO., LTD.**
    **210 Nakanuma Minamiashigara-shi**
    **Kanagawa-ken, 250-01(JP)**

    Proprietor: **Philips Medical Systems Incorporated**
    **710 Bridgeport Avenue**
    **Sheldon Connecticut 06484(US)**

(72) Inventor: **Kazuhiro, Hishinuma**
    **c/o INT. OCTROOIBUREAU B.V. Prof. Holst-**
    **laan 6**
    **NL-5656 AA Eindhoven(NL)**
    Inventor: **Takeshi, Funahashi**
    **c/o INT. OCTROOIBUREAU B.V. Prof. Holst-**
    **laan 6**
    **NL-5656 AA Eindhoven(NL)**
    Inventor: **Masamitsu, Ishida**
    **c/o INT. OCTROOIBUREAU B.V. Prof. Holst-**
    **laan 6**
    **NL-5656 AA Eindhoven(NL)**
    Inventor: **Karam, James T.**
    **c/o INT. OCTROOIBUREAU B.V. Prof. Holst-**
    **laan 6**
    **NL-5656 AA Eindhoven(NL)**

(74) Representative: **Scheele, Edial François et al**
    **INTERNATIONAAL OCTROOIBUREAU B.V.**
    **Prof. Holstlaan 6**
    **NL-5656 AA Eindhoven(NL)**

## Description

## BACKGROUND OF THE INVENTION

### FIELD OF THE INVENTION

This invention relates to an image processing method and apparatus therefor, and more particularly to a method of and apparatus for conducting an unsharp masking process on an image on a radiographic film (hereinafter referred to as "X-ray image") to improve the diagnostic accuracy when the X-ray image is duplicated, and further to a method of and apparatus for frequency processing an image in a system for recording and reproducing a radiation image by use of stimulable phosphor sheet.

### DESCRIPTION OF THE PRIOR ART

Such an image processing method is known from the American patent number 4,317,179. In this patent, a method is disclosed in which the super-low frequency component in an X-ray image is emphasized in order to obtain an image of high quality which is better acceptable to visual sense and in which the high frequency component containing a large amount of noise is comparatively decreased. In this method, an original X-ray image is scanned and converted to an electric signal and the electric signal is subjected to an image processing operation in which an unsharp masking operation of $D' = Dorg + \beta (Dorg - Dus)$ is conducted, wherein D' is the density of the image reproduced on the final duplicated X-ray image, Dorg is the density of the original image, $\beta$ is an emphasizing coefficient, and Dus is the unsharp mask density corresponding to the super-low frequency at the respective scanning point, whereby the frequency lower than the super-low frequency is emphasized.

However, in this method there have been discovered some drawbacks as follows. By emphasizing the particular frequency component, edges or objects in the reproduced image are emphasized, regardless of the size of the objects. Therefore, in those parts of the image where a smaller object of interest is depicted together with a greater structured object, the enhanced edges of the greater object obscure the diagnostic details of the smaller object. Further, even in the area other than the one in which the images of a larger and a smaller object are overlapping, ghost images appear at the edges of the object in the reproduced image by overshooting or undershooting, which will of course affect the diagnosis.

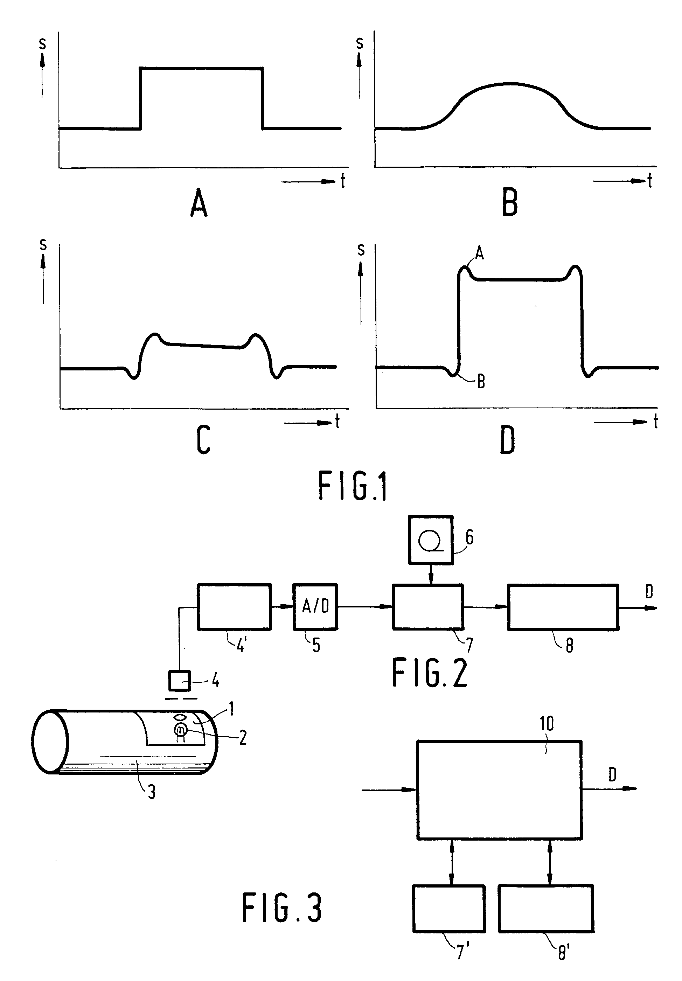

The above-mentioned drawbacks inherent in said prior art will now be described in more detail with reference to the drawings, particularly to Figures 1A to 1D in case of an example of one dimension. In Figures 1A to 1D, the abscissa represents time (position) and the coordinate represents the level of the signal. According to said formula, the unsharp mask density Dus as shown in Figure 1B is subtracted from the original density Dorg as shown in Figure 1A to obtain Dorg-Dus, which is multiplied by $\beta$ to obtain $\beta$(Dorg-Dus) as shown in Figure 1C, and this is added to the original density Dorg to obtain an image signal having emphasized edges with overshoot A or undershoot B as shown in Figure 1D. In this prior art method, there is an advantage that the contrast of an object is enhanced when the size of the unsharp mask is larger than the size of the object, but the edges are also emphasized undesirably. Further, since the emphasis of the edges occurs regardless of the size of the object but depends upon the gradient of the edge of the object, the edges of bones or the heart are emphasized though these structures have large size because these have steep edges. The emphasized edges having overshoot or undershoot appear as a ghost image and deteriorates the diagnostic accuracy and image quality.

## SUMMARY OF THE INVENTION

In view of the above-mentioned drawbacks inherent in the prior art radiographic system, the principal object of the present invention is to provide a method of image processing an X-ray image or a radiation image in which the frequency emphasis is conducted without making a ghost image caused by overshoot or undershoot.

Another object of the present invention is to provide an apparatus for image processing an X-ray image or radiation image by emphasizing a particular frequency component without making a ghost image caused by overshoot or undershoot.

The method and apparatus for carrying out the frequency emphasis according to the present invention is characterized in that, in contrast to said prior art frequency emphasis in which the unsharp mask density or signal (Dus, Sus) was given based on an average of the image signals of all the picture cells in the unsharp mask, the unsharp mask density or signal is determined based on the median (central value) of the signals of the picture cells or elements the "median" (the $(N^2 + 1)/2$-th, data in the accumulated histogram when N is an odd number, the $N^2/2$-th or $N^2/2 + 1$-th data in the accumulated histogram, when N is an even number) is adopted as the unsharp mask density or signal (Dus, Sus).

According to the present invention, since the median is employed as the unsharp mask signal, it becomes possible to limit the size of the object which is emphasized to those having a size smaller than a half of the size of the unsharp mask and occurrence of overshoot and undershoot is prevented and the ghost image can be eliminated.

Therefore, by applying the present invention to the medical diagnosis, the edges of the large-sized structures such as ribs and the heart are not emphasized but only the blood vessels are emphasized. Accordingly, this method is particularly suitable for extracting blood vessel shadows of an image of lungs and provides an image of high diagnostic efficiency and accuracy. Further, it is suitable for extracting stomach walls or fine structures of bones. Hence, the diagnostic efficiency and accuracy can be fairly improved in the filed of medical diagnosis. Furthermore, since the ghost images are prevented from being formed in the radiation images, the shape of the edges of bones can be correctly reproduced, which will prevent errors in diagnosis and is therefore very desirable in the medical diagnostic application.

It should be noted that an image processing method and apparatus of the above-mentioned kind are known from the European patent applications EP 031.952 and EP 032.237. In these patents a method of and apparatus for processing an image, specifically a radiation image or a radiographic image, are described. In the processing of the output signal from an image scanning device, said output signal is converted into an electric signal Sorg from which an unsharp mask signal, Sus, corresponding to the super-low frequencies, is obtained for every scanning point. Thereupon a signal conversion represented by S' = Sorg + F(X) is performed to emphasize the frequency component above the super-low frequency, where X is X = Sorg - Sus and F(X) is a monotone increasing function which satisfies the condition of $F'(X_1) \geq F'(X_2) \geq 0$ for arbitrary values $X_1$, $X_2$ of X ($|X_1| < |X_2|$).

BRIEF DESCRIPTION OF THE DRAWING

Figures 1A, 1B, 1C and 1D are graphs showing the image signal in the prior art frequency processing,

Figure 2 is a schematic view showing an embodiment of an apparatus carrying out the image processing method according to the present invention,

Figure 3 is a blockdiagram which shown an example of a variation of a part of the apparatus,

Figures 4A to 4E are graphs showing the image signal which is frequency processed according to the present invention,

Figures 5 and 6 are explanatory views for explaining the method of calculation to obtain an unsharp mask signal according to the present invention,

Figure 7 is a graph showing a variation of the emphasizing coefficient,

Figures 8A, 8B and 8C are diagrams showing various methods of obtaining the median, and

Figure 9 is a schematic view showing another embodiment of an apparatus carrying out the image processing method according to the present invention.

DESCRIPTION OF THE PREFERRED EMBODIMENTS

Now the present invention will be described in more detail with reference to several embodiments referring to the accompanying drawings.

Figure 2 shows an embodiment of an apparatus for carrying out the method of image processing according to the present invention. A radiographic film 1 bearing X-ray image information is attached on the surface of a rotating drum 3 made of transparent material, and the light from a light source 2 located in the drum 3 passing through the radiographic film 1 is received by a photomultiplier tube 4 located outside the drum 3 to convert the image information into an electric signal. The electric image signal is converted to digital values by way of a logarithmic amplifier 4' and an A/D converter 5 to obtain digital values of original density Dorg. The X-ray image information is digitized by use of a drum scanner in the above-described example. However, it may be understood that a plan scanner using a CCD line sensor can be employed instead.

The image signal indicative of the original density Dorg thus obtained or the signal taken out of a memory device 6 which memorizes the original density signal Dorg thus obtained in a magnetic tape or disc is input into a median calculating unit 7. In the median calculating unit 7, a median (Dus) of the image signal or digital data of the picture elements in an unsharp mask having the size of N x N is calculated, and the calculated median Dus and the original density signal Dorg are input into an arithmetic unit 8. In the arithmetic unit 8, an operation of Dorg + β (Dorg - Dus), i.e. frequency processing, is conducted to output a final image density D which is frequency processed.

The above operation may be conducted by use of a multiprocessor in which synchronization is made for every line or as shown in Figure 3 by non-synchronized calculation of median calculation and frequency processing calculation. That is, as shown in Figure 3, it is possible to input an image density Dorg into an image memory 10, and calculate the median and the frequency processing in a non-synchronized manner in a median calculating unit 7' and a frequency processing calculating unit 8' based on the digital data stored in the image memory 10, which has as its output a final image signal indicating the final image density D from the image memory 10. The calculation according to the example as shown in Figure 3 is disadvantageous in that it is not a real time processing but is advantageous in that it is possible to output an image only based on the median. Further, it is of course possible to make the calculation in the median calculating unit 7' and the calculation in the frequency processing unit 8' synchronized with each other by use of a single processor.

The output image signal is forwarded to a recording device or a reproducing device to record or reproduce an image. That is, the output signal may be recorded in a magnetic tape or disc to be stored or used for reproducing a visible image on a cat of a photosensitive material.

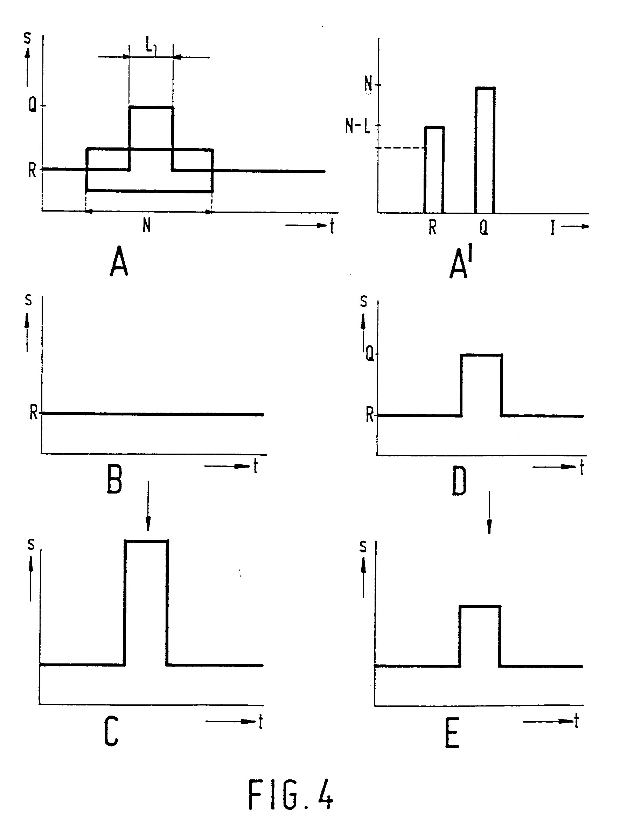

Now referring to Figures 4A to 4E, the effect of the frequency processing or the unsharp masking process in which the median is used as the unsharp mask signal will be described as to the case wherein the object is regarded ideally as a rectangular wave, in one dimension. Figure 4A shows the original image data Dorg. The width of the object of the image is indicated by L in Figure 4A, whereas the width of the unsharp mask is N picture elements. Figure 4A' shows the accumulated histogram for the picture elements within the mask for a position of the mask as is shown in Figure 4A. There are L picture elements having a high signal value Q and N-L picture elements having a low signal value R. From Figure 4A' it follows that the median is the signal value corresponding with 1/2 N picture elements. From the Figure follows that if $1/2 N \geq N - L$, or $N \leq 2L$ the median equals Q when the centre of the unsharp mask is situated within the interval L, and equals R for other positions of the unsharp mask. This is shown in Figure 4D.

From Figure 4A' it also follows that, if $N > 2L$, the median equals R for all positions of the unsharp mask, as is shown in Figure 4B. In this case the frequency processing using the median will result in the image signal D as shown in Figure 4C wherein only the part of the object is emphasized. Hence, by this method, only the object of small size can be emphasized. Further, as shown in Figure 4C, overshoot or undershoot is not observed at all.

When the size of the unsharp mask (N) is not larger than double of the size of the object (2L), the unsharp mask signal (Dus) will become the same as the original image signal (Dorg) as shown in Figure 4D. Therefore, the final signal after the frequency signal (D) will become the same as the original signal (Dorg) as shown in Figure 4E. That is, in this case, the structure or object of a comparatively large size cannot be employed. In this case too, no overshoot or undershoot is observed.

Though the above description is made only with respect to the ideal case in which the object is represented by a rectangular wave signal, it was confirmed by the inventors that similar results were obtained when the present method was applied to the practical medical images. In other words, according to the present invention, while the fine structures are emphasized, the structures of comparatively large scale are not emphasized and even the parts where the different size of objects are overlapping were observed without overshoot or undershoot. Accordingly, an image of high quality and high diagnostic efficiency and accuracy was obtained.

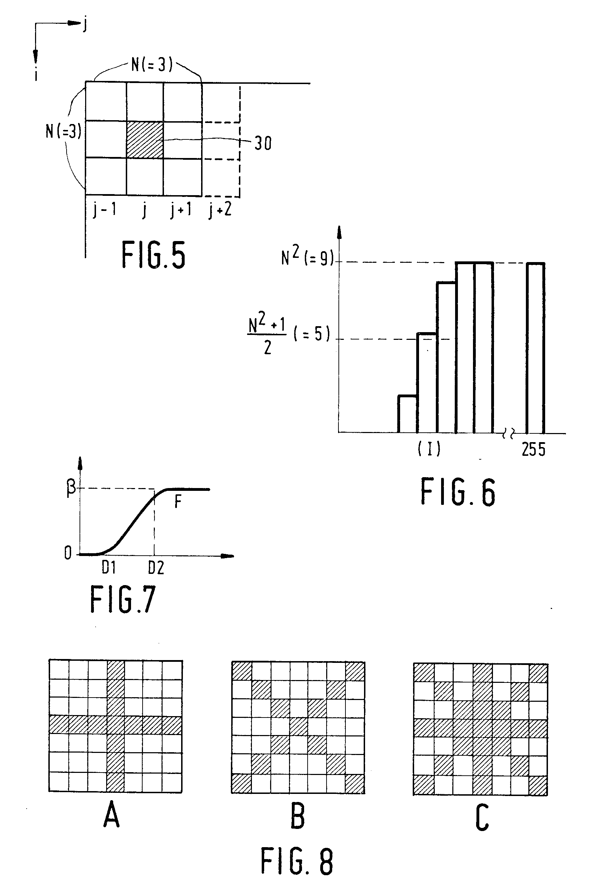

Though according to the invention noises of high frequency are emphasized as well, the influence thereof can mostly be eliminated by using an emphasizing function F(Dorg) in place of the emphasizing coefficient $\beta$ as shown in Figure 7. That is, since the X-ray quantum noise mainly observed in an X-ray image often appear in the low density area of the image or the low exposure area, the noise can be eliminated by using a non-linear emphasizing function which reduces the emphasizing coefficient in the low density area. Thus, the emphasizing coefficient $\beta$ can be a variable which varies according to the level of the original density Dorg. It should be noted, therefore, that the emphasizing coefficient may be a constant or a variable in this specification.

Furthermore, although the above description is made only with respect to the image used for medical diagnosis, it will be noted that the present invention can be applied to images used for industrial engineering because the problem of the ghost image is also observed in the industrial images which is subjected to an image processing of various kinds.

Now, an example of a concrete calculating method in the median calculating unit 7 will be described in detail with reference to Figures 5 and 6.

As shown in Figure 5, it is assumed that the original density Dorg (i, j) is of the picture element at the position (i, j). The unsharp mask density or the median therefore (Dus) is obtained as follows. At first, an accumulated histogram CUMUL(I) in the mask in the digital image is made (Figure 6). Concretely, assuming that the size of the mask is $N(=3) \times N(=3)$ and the image density data of the digital data is designated by 8 bits, the number of picture elements of the mask is N x N or 9, and the median M is the 5th data in the 9 data, which is compared with a value in the accumulated histogram CUMUL(I). The comparing step may be initiated from 0 or from 255. Or, it may be started from the previous median which can be memorized with respect to the previous picture element.

Then, the value I where CUMUL(I) becomes CUMUL(I) $\geq$ ($N^2$ = 1)/2 is made the median at the position of the mask. That is, this is the unsharp mask signal Dus for the original density Dorg (i, j).

Then, when the mask is shifted one by one in Figure 5, the level of the signal (gray level in Figure 5) with respect to the N-number of image signals at the (j - 1)-th row is subtracted from the accumulated histogram and thereto added is the level of the signal with respect to the N-number of image signals at the (j + 2)-th row. That is, the operations of

CUMUL(K) = CUMUL(K) - 1,

      where Dorg (i, j - 1) $\leq$ K $\leq$ 255, and

CUMUL(L) = CUMUL(L) + 1,

      where Dorg (i, j + 2) $\leq$ L $\leq$ 255
are repeated until i = N. Further, when the mask is shifted downward, a similar operation is conducted with respect to the lines (i).

Thus, the unsharp mask density or median Dus is obtained. Of course, the above-mentioned 8 bits may be 10 bits, in which case 255 becomes 1023, or more bits. Further, the shape of the mask may not be a square but may be rectangular, M x N or may be a circle of the diameter R.

Furthermore, only a part of the picture elements in the mask may be used for obtaining the unsharp mask taking into consideration that the spatial distribution of the image density of an X-ray image changes gently or smoothly. Figures 8A, 8B and 8C show some of these examples in which not all of the image data in the mask is used for obtaining the median. Figure 8A shows a pattern of a cross, Figure 8B shows a pattern of "X" and Figure 8C shows a pattern of a combination of the cross and "X". Such a method is able to shorten the calculating time owing to the reduced number of digital data.

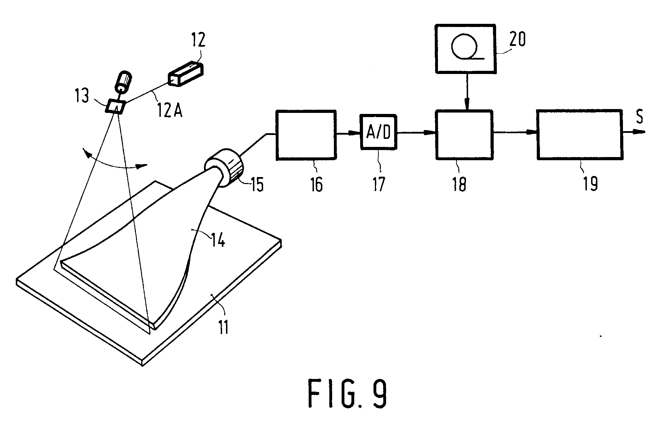

Figure 9 shows another embodiment of the present invention which is applied to a radiation image recording and reproducing system using a stimulable phosphor sheet.

A stimulable phosphor sheet 11 in which radiation image information is stored is scanned by a laser beam 12A emitted by a laser source 12 and deflected in the main scanning direction by a galvanometer 13. The scanned stimulable phosphor sheet 11 emits light upon exposure to the laser beam 12 A which is received by a photodetector 15 such as a photomultiplier tube by way of a light guide 14. The photodetector 15 converts the light carrying the radiation image information into an electric image signal Sorg. The output signal Sorg is forwarded to a logarithmic amplifier 16, then to an A/D converter 17, and further to a median calculating unit 18. The arithmetic unit 19 and a memory device 20 are equivalent to those as shown in Figure 2 as well as said elements 16 to 18. The function of these elements is quite the same as that of the elements as shown in Figure 2 and described hereinbefore with reference to the density signals D, Dorg and Dus for an X-ray image duplication. Therefore, the detailed description of the embodiment shown in Figure 9 is omitted here, which will readily be understood by replacing D, Dorg and Dus with S, Sorg and Sus.

## Claims

1. Image processing method for scanning an information storing means to obtain an electric image signal therefrom and for conversion of said electric image signal into a visible image, said image processing method comprising the steps of: converting said electric image signal into a number of digital signals (Dorg) for respective picture elements of said image corresponding to scanning points and obtaining a low-frequency signal (Dus) for each picture element from a group of said digital signals within a mask of a predetermined size, and conducting an operation of Dorg + $\beta$ (Dorg - Dus) using a frequency emphasizing coefficient $\beta$, characterized in that, for the low-frequency signal Dus a signal value is used for which in a cumulative distribution (accumulated histogram) of the signals of the picture elements within the mask, half the number of picture elements is found, i.e. the median of said group of digital signals in said cumulative distribution.

2. An image processing method as defined in claim 1 wherein the size of said mask is made more than twice as large as the object desired to be emphasized in said image.

3. Am image processing method as defined in claim 1 or 2 wherein said median is determined for some of the digital signals in said mask.

4. An image processing method as defined in claim 3 wherein the median is determined for digital signals of which the picture elements in said mask arranged in a pattern of a cross or "X", or a combination of a cross and "X".

5. An image processing method as defined in claim 1, 2, 3 or 4, wherein said image information storing means (1) comprises an X-ray film that is to be scanned by a beam of light, which light beam after scanning said X-ray film carries said image information, and is converted by a photoelectric transducer (4) into an electric signal.

6. Image processing method as defined in claim 1, 2, 3 or 4, wherein said image information storing means comprises a stimulable phosphor sheet (11), which upon scanning is stimulated and emits image information, stored therein, in the form of light, said lightbeam being converted into an electric signal.

7. A radiation image processing apparatus for a radiation image information recording and reproducing system which comprises a stimulating ray source (12) for emitting scanning stimulating rays which scan a stimulable phosphor sheet (11) carrying radiation image information and causes light carrying said radiation image information to be emitted by the stimulable phosphor sheet (11), a photodetector (15) for detecting said emitted light and converting same into an electric image signal, and operating means (16), (17), (18), (19), (20) for processing said electric image signal, said operating means comprising: a converter (17) for converting said electric image signal into a number of digital signals (Sorg) for respective picture elements of said image, an operating means (19) for conducting an operation of $Sorg = \beta(Sorg - Sus)$ where Sus is a low-frequency signal and $\beta$ is a frequency emphasizing coefficient, the radiation image processing apparatus comprises a further operating means (18) for obtaining the low-frequency signal Sus from a group of said digital signals in a mask of a predetermined size, characterized in that Sus is the value for which in a cumulative distribution (accumulated histogram) of the signals of the picture elements within the mask, half the number of picture elements is found, i.e. the median of said group of digital signals in said cumulative distribution.

8. A radiation image processing apparatus as defined in claim 7 wherein said first operating means (19) and said second operating means (18) consist of a single processor.

**Patentansprüche**

1. Bildbearbeitungsverfahren zum Abtasten eines Informationsspeichers zum Erhalten eines elektrischen Bildsignals aus diesem Speicher sowie zum Umsetzen des elektrischen Bildsignals in ein sichtbares Bild, wobei dieses Bildbearbeitungsverfahren die Schritte des Umsetzens des elektrischen Bildsignals in eine Anzahl von Digitalsignalen (Dorg) für jeweilige Bildelemente des genannten Bildes entsprechend Abtastpunkten und des Erhaltens eines Niederfrequenzsignals (Dus) für jedes Bildelement aus einer Gruppe der Digitalsignale innerhalb einer Maske einer vorgegebenen Abmessung, und des Leitens einer Operation von Dorg + $\beta$ (Dorg - Dus) unter Benutzung eines Frequenzhervorhebungskoeffizienten $\beta$ umfaßt, dadurch gekennzeichnet, daß für das Niederfrequenzsignal Dus ein Signalwert benutzt wird, für den in einer kumulativen Verteilung (kumuliertes Histogramm) des Signals der Bildelemente innerhalb der Maske die Hälfte der Anzahl von Bildelementen gefunden wird, d.h. der Medianwert der Gruppe von Digitalsignalen in der kumulativen Verteilung.

2. Bildbearbeitungsverfahren nach Anspruch 1, worin die Abmessungen der Maske mehr als das Zweifache größer sind als das zum Hervorheben gewünschte Objekt im Bild.

3. Bildbearbeitungsverfahren nach Anspruch 1 oder 2, worin der Medianwert für einige der Digitalsignale in der Maske bestimmt wird.

4. Bildbearbeitungsverfahren nach Anspruch 3, worin der Medianwert für Digitalsignale bestimmt wird, deren Bildelemente in der Maske in einem kreuzförmigen oder in einem "X"-Muster oder in einer Kombination von Kreuz- und X-Form angeordnet sind.

5. Bildbearbeitungsverfahren nach Anspruch 1, 2, 3 oder 4, worin der Bildinformationsspeicher (1) einen Röntgenfilm enthalt, der durch einen Lichtbündel abzutasten ist, das nach dem Abtasten des Röntgenfilms die Bildinformation mitführt, und das ein photoelektrischer Wandler (4) in ein elektrisches Signal umsetzt.

6. Bildbearbeitungsverfahren nach Anspruch 1, 2, 3 oder 4, worin der Bildinformationsspeicher eine abregbare Phosphorplatte (11) enthält, die beim Abtasten angeregt wird und darin eingeschriebene Bildinformation in Form von Licht aussendet, wobei das Lichtbündel in ein elektrisches Signal umgesetzt wird.

7. Strahlungsbildbearbeitungsapparat für ein Strahlungsbild-Aufzeichnungs- und -Wiedergabesystem, das eine anregende Strahlungsquelle (12) zum Aussenden abtastender anregender Strahlen, die eine anregbare Phosphorplatte (11) abtasten, die Strahlungsbildinformation trägt, das das Aussenden des die Strahlungsbildinformationtragenden Lichts durch die anregbare Phosphorplatte (11) veranlaßt, einen Photodetektor (15) zum Detektieren des ausgesandten Lichts und zum Umsetzen dieses Lichts in ein elektrisches Bildsignal und ein Betriebsmittel (16), (17), (18), (19), (20) zum Bearbeiten des elektrischen Bildsignals enthält, und das Betriebsmittel einen Umsetzer (17) zum Umsetzen des elektrischen Bildsignals in eine Anzahl von Digitalsignalen (Sorg) für jeweilige Bildelemente des Bildes, ein Betriebsmittel (19) zum Leiten einer Operation von Sorg = $\beta$(Sorg - Sus) enthält, worin Sus ein Niederfrequenzsignal und $\beta$ ein Frequenzhervorhebungskoeffizient ist, der Strahlungsbildbearbeitungsapparat ein weiteres Betriebsmittel (18) zum Erhalten des Niederfrequenzsignals aus einer Gruppe der Digitalsignale in einer Maske mit vorgegebenen Abmessungen enthält, dadurch gekennzeichnet, daß Sus der Wert ist, für den in einer kumulativen Verteilung (kumuliertes Histogramm) der Signale der Bildelemente innerhalb der Maske die Hälfte der Anzahl von Bildelementen gefunden wird, d.h. der Medianwert der Gruppe von Digitalsignalen in der kumulativen Verteilung.

8. Strahlungsbildbearbeitungsapparat nach Anspruch 7, worin das erste Betriebsmittel (19) und das zweite Betriebsmittel (18) aus einem einzigen Prozessor bestehen.

**Revendications**

1. Procédé de traitement d'images pour balayer un dispositif de stockage d'information en vue d'en obtenir un signal d'image électrique et pour convertir le signal d'image électrique en une image visible, ce procédé de traitement d'images comprenant les étapes consistant à : convertir le signal d'image électrique en un certain nombre de signaux numériques (Dorg) pour des éléments d'image respectifs de l'image correspondant à des points de balayage et obtenir un signal de basse fréquence (Dus) pour chaque élément d'image d'un groupe des signaux numériques dans un masque d'une dimension prédéterminée, et effectuer une opération Dorg + $\beta$(Dorg - Dus) en utilisant un coefficient d'accentuation de fréquence $\beta$, caractérisé en ce que, pour le signal de basse fréquence Dus, on utilise une valeur de signal pour laquelle, dans une distribution cumulative (histogramme accumulé) des signaux des éléments d'image dans le masque, on trouve la moitié des éléments d'image, c'est-à-dire la médiane du groupe de signaux numériques dans la distribution cumulative.

2. Procédé de traitement d'images suivant la revendication 1, dans lequel la dimension du masque est rendue égale à plus du double de celle de l'objet que l'on souhaite accentuer dans l'image.

3. Procédé de traitement d'images suivant la revendication 1 ou 2, dans lequel la médiane est déterminée pour certains des signaux numériques dans le masque.

4. Procédé de traitement d'images suivant la revendication 3, dans lequel la médiane est déterminée pour des signaux numériques pour lesquels les éléments d'image dans le masque sont disposés en un motif d'une croix ou d'un "X" ou d'une combinaison d'une croix et d'un "X".

5. Procédé de traitement d'images suivant la revendication 1, 2, 3 ou 4, dans lequel le dispositif de stockage d'information d'image (1) comprend un film à rayons X qui doit être balayé par un faisceau lumineux, ce faisceau lumineux, après le balayage du film à rayons X, portant l'information d'image et étant converti par un transducteur photoélectrique (4) en un signal électrique.

6. Procédé de traitement d'images suivant la revendication 1, 2, 3 ou 4, dans lequel le dispositif de stockage d'information d'image comprend une feuille luminescente stimulable (11) qui est stimulée lors du balayage et émet de l'information d'image qui y est stockée, sous forme de lumière, le faisceau lumineux étant converti en un signal électrique.

7. Appareil de traitement d'images de rayonnement pour un système d'enregistrement et de reproduction d'information d'images de rayonnement qui comprend une source de rayonnement de stimulation (12) pour émettre des rayons de stimulation de balayage qui balaient une feuille luminescente stimulable (11) portant de l'information d'image de rayonnement et qui provoquent l'émission, par la feuille luminescente stimulable (11), de lumière véhiculant l'information d'image de rayonnement, un photodétecteur (15) pour détecter la lumière émise et la convertir en un signal d'image électrique et des moyens actifs (16, 17, 18, 19, 20) pour traiter le signal d'image électrique, les moyens actifs comprenant : un convertisseur (17) pour convertir le signal d'image électrique en un certain nombre de signaux numériques (Sorg) pour des éléments d'image respectifs de l'image, un moyen actif (19) pour effectuer une opération Sorg = $\beta$ (Sorg - Sus), où Sus est un signal de basse fréquence et $\beta$ est un coefficient d'accentuation de fréquence, l'appareil de traitement d'images de rayonnement comprenant un autre moyen actif (18) permettant d'obtenir le signal de basse fréquence Sus d'un groupe desdits signaux numériques dans un masque d'une dimension prédéterminée, caractérisé en ce que Sus est la valeur pour laquelle, dans une distribution cumulative (histogramme accumulé) des signaux des éléments d'image dans le masque, on trouve la moitié des éléments d'image, c'est-à-dire la médiane du groupe de signaux numériques dans la distribution cumulative.

8. Appareil de traitement d'image de rayonnement suivant la revendication 7, dans lequel le premier moyen actif (19) et le second moyen actif (18) sont formés par un processeur unique.

FIG.1

FIG.2

FIG.3

FIG.4

FIG.5

FIG.6

FIG.7

A

B

C

FIG. 8

FIG. 9